# EUROPÄISCHE PATENTANMELDUNG

(11) **EP 3 034 845 A2**
(43) Veröffentlichungstag der Anmeldung: **22.06.2016**
(21) Anmeldenummer: 15002862.9
(22) Anmeldetag: 07.10.2015
(51) Int. Cl.: F02D 41/14, F02D 41/30, F02D 19/06

(54) **VERFAHREN ZUM BETREIBEN EINER FUNKENGEZÜNDETEN BRENNKRAFTMASCHINE**

(30) Priorität: 19.12.2014 AT 9232014
(71) Anmelder: GE Jenbacher GmbH & Co. OG, 6200 Jenbach (AT)
(72) Erfinder: Gruber, Friedrich, 6283 Hippach (AT); Spyra, Nikolaus, 6020 Innsbruck (AT); Trapp, Christian, 6067 Absam (AT); Tinschmann, Georg, 6130 Schwaz (AT); Musu, Ettore, 41051 Modena (IT)
(74) Vertreter: Torggler & Hofinger Patentanwälte

(57) **Zusammenfassung**

Verfahren zum Betreiben einer funkengezündeten Brennkraftmaschine mit wenigstens einem Zylinder und einem in dem wenigstens einen Zylinder bewegbaren Kolben und wenigstens einer, mit dem wenigstens einen Zylinder verbundenen Vorkammer, wobei das Verfahren die Schritte umfasst:
- Bilden eines zündfähigen Gemisches durch weitestgehend homogenes Mischen eines ersten Kraftstoffes und Luft und Einführen dieser Mischung in den wenigstens einen Zylinder,
- Verdichten des zündfähigen Gemisches mit dem Kolben in einem Verdichtungstakt, Einführen eines zweiten Kraftstoffes in die Vorkammer zu einem Einführungszeitpunkt vor Beginn der Verbrennung, dadurch Schaffen einer Vorkammerladung, wobei der zweite Kraftstoff die gleiche oder eine verschiedene chemische Zusammensetzung und/oder Konzentration bezüglich des ersten Kraftstoffes aufweist,
- Funkenzünden der Vorkammerladung,

wobei die Emission des wenigstens einen Zylinders und/oder die durch die Verbrennung verursachte Spannung auf den wenigstens einen Zylinder beobachtet werden und wenn die Emissionen und/oder die mechanische Spannung über jeweiligen vorgegebenen Schwellwerten liegt, individuell für den wenigstens einen Zylinder die chemische Zusammensetzung und/oder die Menge an in die Vorkammer zugeführten zweiten Kraftstoffes, und/oder die Temperatur der Zylinderladung, und/oder der Zündzeitpunkt verändert werden, solchermaßen, dass die Emissionen und/oder die mechanische Spannung unter ihre jeweiligen vorgegebenen Schwellwerte gehen.

## Beschreibung

Die vorliegende Erfindung ist auf ein Verfahren zum Betreiben einer funkengezündeten Brennkraftmaschine mit den Merkmalen des Oberbegriffs von Anspruch 1 und auf eine funkengezündete Brennkraftmaschine mit den Merkmalen des Oberbegriffs von Anspruch 19 gerichtet.

Bei der Auslegung von funkengezündeten Brennkraftmaschinen besteht ein Zielkonflikt bei der Reduktion verschiedener Arten von Emissionen wie Stickoxiden (NOx), unverbrannten Kohlenwasserstoffen (HC) und Kohlenmonoxid (CO).

Ein vielversprechender Ansatz für eine Verbrennung mit hohem Wirkungsgrad und geringen Emissionen ist das sogenannte HCCI-Konzept, (engl. *Homogenous Charge Compression Ignition*). Hier erfolgt die Entzündung einer hochverdünnten (das heißt mager gemischt und/oder mit einer hohen Abgasrückführrate) und homogenen Kraftstoff-Luft-Mischung durch den Temperaturanstieg während des Verdichtungstaktes nahe dem oberen Totpunkt. Die stark verdünnte Kraftstoff-Luft-Mischung erlaubt eine Verbrennung mit extrem geringen Werten von Stickoxiden (NOx).

Die Selbstentzündung des Kraftstoff-Luft-Gemisches in der Brennkammer wird durch eine Kombination verschiedener Maßnahmen erreicht, wie zum Beispiel ein hohes geometrisches Verdichtungsverhältnis □□und□ein Vorwärmen der Ladung durch geeignete Maßnahmen (zum Beispiel Vorwärmen der Ladeluft oder Abgasrückführung, AGR).

Da im HCCI Brennverfahren das Kraftstoff-Luft-Gemisch mehr oder weniger gleichzeitig in der gesamten Brennkammer nahe dem oberen Totpunkt zündet, läuft das Verbrennungsereignis extrem schnell ab.

Mit dem HCCl-Konzept sind einige Probleme verbunden. Die Verbrennung ist schwer zu kontrollieren. Ein zweiter Kraftstoff mit unterschiedlichen Selbstzündungseigenschaften als der erste Kraftstoff ist ein bekanntes Konzept, um die Kontrollierbarkeit zu verbessern. Dies hat natürlich den Nachteil, dass es die Handhabung eines zweiten Kraftstoffes erfordert.

Im Gegensatz dazu kann bei funkengezündeten Brennkraftmaschinen das Timing der Verbrennung leicht durch den Zündzeitpunkt kontrolliert werden. In großen, funkengezündeten Brennkraftmaschinen (typischerweise bei Bohrungen von 150 mm und mehr) sind Vorkammern vorgesehen, in welchen die Zündung initiiert wird.

Aus dem Stand der Technik sind auch Konzepte bekannt, um funkengezündete Brennkraftmaschinen des Vorkammertyps zu kontrollieren. So zeigt beispielsweise die JP 2013209967 eine aktive Vorkammer, wobei die Menge des der Vorkammer zugeführten Kraftstoffes kontrolliert werden kann, um Fehlzündungen zu vermeiden.

Aufgabe der vorliegenden Erfindung ist es, ein Verfahren bzw. eine funkengezündete Brennkraftmaschine anzugeben, welches bzw. welche die Vorteile des HCCl-Konzeptes und die leichte Kontrollierbarkeit einer funkengezündeten Brennkraftmaschine vereint.

Diese Aufgabe wird erreicht durch ein Verfahren gemäß Anspruch 1 und eine funkengezündete Brennkraftmaschine gemäß Anspruch 19.

Gemäß der Erfindung werden der Energiegehalt der Vorkammer und/oder die chemische Zusammensetzung der Vorkammer-Ladung als Kontrollmittel verwendet um den Verbrennungsvorgang im Hauptbrennraum zu kontrollieren. Es sei festgehalten, dass durch die Fluidverbindung zwischen der Vorkammer und dem Hauptbrennraum mit "Zylinderladung" die Ladung von dem gemeinsamen Volumen von Hauptbrennraum und Vorkammer gemeint ist, wenn wir über "Zylinderladung" sprechen.

Die Erfindung kann am besten ausgeführt werden, wenn vorgesehen ist, dass ein Ventil, welches die Zuführung von Luft und/oder zweiten Kraftstoff in die Vorkammer gewährleistet, aktiv und individuell für jede in der Brennkraftmaschine vorgesehenen Vorkammer kontrolliert werden kann.

Es ist vorteilhaft eine sehr schnelle Verbrennung im Hauptbrennraum mit einer sehr verdünnten (mageren) Zylinderladung zu haben. Eine sehr schnelle Verbrennung erhöht den Wirkungsgrad der Verbrennung und verringert HC-Emissionen. Durch die hohe Verdünnung sind die NOx-Emissionen gering und die Klopf-Tendenz ist reduziert.

Obwohl die Zylinderladung sehr mager ist, ist durch Kontrollieren der Temperatur der Zylinderladung und durch Beeinflussen des Energiegehaltes und/oder der chemischen Zusammensetzung der Vorkammer-Ladung eine Zündung und schnelle Verbrennung der sehr mageren Zylinderladung möglich. Die Verwendung einer aktiven Vorkammer erlaubt es, den Energiegehalt und die chemische Zusammensetzung der Vorkammer-Ladung zwischen individuellen Vorkammern zu variieren.

Bezüglich der Gase beziehen sich alle in % angegebenen Werte auf Volumenprozent.

Der erste Kraftstoff kann Erdgas oder eine Mischung von Erdgas und Kohlendioxid (CO2) solchermaßen sein, dass die Menge von CO2 und Methan (CH4) größer als 80 % ist. Der zweite Kraftstoff kann Erdgas oder eine Kombination von Erdgas mit einem Gas mit einem Gehalt von H2 größer als 10 vol.-% sein.

Dadurch, dass vorgesehen ist, dass die Emissionen des wenigstens einen Zylinders und/oder die mechanischen Spannungen des wenigstens einen Zylinders, welche von der Verbrennung verursacht werden, beobachtet werden, und wenn die Emissionen und/oder die mechanischen Spannungen über den jeweiligen vorgegebenen Schwellwerten sind, individuell für den wenigstens einen Zylinder, die Menge und/oder die chemische Zusammensetzung des zweiten, in die Vorkammer zugeführten Kraftstoffes, und/oder die Temperatur der Zylinderladung, Zündzeitpunkt solchermaßen geändert werden, dass die Emissionen und/oder die mechanische Spannung unter ihre jeweiligen vorgegebenen Schwellwerte gehen, wird erreicht, dass man die Brennkraftmaschine viel besser bei verschiedenen Umgebungsbedingungen wie z.B. Umgebungstemperatur, Feuchtigkeit, Höhe, bei der die Maschine betrieben wird, betreiben kann. Unter mechanischen Spannungen, welche durch das vorliegende Verfahren auf besonders vorteilhafte Weise kontrolliert werden können, sind insbesondere mechanische Belastungen gemeint, wie sie etwa durch einen zu hohen Zylindermitteldruck (engl. *break mean effective pressure,* BMEP) oder einen zu hohen Zylinderspitzendruck (engl. *peak firing pressure,* PFP) entstehen können.

Auch im Hinblick auf mechanische Toleranzen - die notwendigerweise bei einer Brennkraftmaschine vorhanden sind - lassen sich durch die vorliegende Erfindung Variationen zwischen individuellen Zylindern im Hinblick auf Energiegehalt und chemische Zusammensetzung, welche in individuellen Vorkammerladungen vorhanden sind, Verdichtungsverhältnisse, Gaswechselablagerungen etc., wesentlich besser ausgleichen.

Wenn die Kraftstoffqualität sich ändert, kann das erfinderische Konzept auch diese Änderungen kompensieren. Es kann vorgesehen sein, dass das Beobachten der Emission des wenigstens einen Zylinders und/oder der durch die Verbrennung verursachten mechanischen Spannung des wenigstens einen Zylinders dadurch ausgeführt wird, dass für das Verbrennungsereignis charakteristische Signale in dem wenigstens einen Zylinder gemessen werden.

Es ist nicht erforderlich, die Emissionen direkt zu messen, sondern anstelle dessen Verbrennungscharakteristika zu verwenden. Dies kann auf verschiedene Wege geschehen: es kann z.B. vorgesehen sein, dass der Schritt des Messens von für das Verbrennungsereignis charakteristischen Signalen in dem wenigstens einen Zylinder das Erfassen eines charakteristischen Zeitpunktes des Verbrennungsereignisses und/oder der Dauer des Verbrennungsereignisses umfasst. Ein solch charakteristischer Zeitpunkt der Verbrennung kann z.B. die Schwerpunktlage der Verbrennung sein. Typischerweise werden die Schwerpunktlage und die Brenndauer durch Zylinderdruckmessung erhalten; alternative Ansätze sind allerdings Ionenstrommessungen und optische Ansätze. Die Dauer der Verbrennung, auch "Brenndauer", ist ein Maß für den Verbrennungsfortschritt in einem Verbrennungszyklus, ausgedrückt als der innerhalb eines bestimmten Kurbelwinkels verbrannten Massenanteils. So bedeutet beispielsweise die Brenndauer von Δθ_{0-10%} von 15° Kurbelwinkel, dass 10 % der Ladungsmasse innerhalb 15° Kurbelumdrehung verbrannt sind. Die Schwerpunktlage (engl. *combustion center of gravity*) der Verbrennung bezeichnet den Zustand, in welchem die Hälfte der Frischladung verbrannt ist. Dies ist auch als MFB 50 bekannt, das heißt 50 % der Masse ist verbrannt (engl. *mass fraction burned*). Für die Begriffe sei auf Lehrbücher zu Brennkraftmaschinen verwiesen, siehe im speziellen Heywood, John B., Internal Combustion Engine Fundamentals, New York, McGraw-Hill, 1988.

Für das Verständnis der Flammengeschwindigkeit sollen im Kontext der vorliegenden Erfindung folgende Definitionen gelten:
Wie in der relevanten Literatur beschrieben, ist die laminare Flammengeschwindigkeit eines Gases oder einer Gasmischung die Geschwindigkeit, bei der die Flamme des entzündeten Gases oder der Gasmischung normal zur Flammenfront relativ zum unverbrannten Gas oder der Gasmischung fortschreitet. Gemäß der Erfindung wird eine Ladung mit einer geringen Flammengeschwindigkeit als Gas oder Gasmischung mit einer geringen laminaren Flammengeschwindigkeit interpretiert. Ein Gas oder eine Gasmischung mit einer laminaren Flammengeschwindigkeit von weniger als 10 cm/Sekunde wäre bspw. eine Ladung mit einer geringen Flammengeschwindigkeit.

Generell sind die angegebenen Werte unter Normalbedingungen, wie in der relevanten Literatur beschrieben, d.h. zum Beispiel mit einem Verbrennungsluftverhältnis von 1 und Atmosphärendruck.

Methoden zum Bestimmen der laminaren Flammengeschwindigkeit eines Gases sind aus dem Stand der Technik bekannt, wie z.B. durch bekannte experimentelle Methoden wie die Bunsenbrennermethode oder die Flachflammenmethode. Zusätzlich kennt der Fachmann auch numerische Berechnungsmethoden, durch welche die laminare Flammengeschwindigkeit eines Gases aus seiner Gaszusammensetzung berechnet werden kann.

Es kann vorgesehen sein, dass der Schritt des Änderns der Menge und/oder der chemischen Zusammensetzung des zweiten Kraftstoffes, welcher in die Vorkammer eingeführt wird, das Reduzieren der Menge des zweiten Kraftstoffes umfasst, wenn die mechanische Spannung zu groß ist.

Durch Ändern der Menge des zweiten Kraftstoffes, welcher eingeführt wird und/oder der chemischen Zusammensetzung der Vorkammerladung solchermaßen, dass der Energiegehalt und/oder die Flammengeschwindigkeit verringert werden, kann die mechanische Spannung reduziert werden.

Indem die Menge des zweiten Kraftstoffes reduziert wird und/oder die chemische Zusammensetzung der Vorkammerladung angepasst wird, wird die Verbrennung verzögert und dadurch der Spitzendruck reduziert und damit die mechanischen Spannungen auf den Motor reduziert.

Auch kann vorgesehen sein, dass der Schritt des Änderns der Temperatur der Zylinderladung ein Senken der Temperatur der Zylinderladung umfasst, wenn die mechanische Spannung zu groß ist. Dies kann bspw. durch Senken der Einlasstemperatur des ersten Kraftstoffes und der Ansaugladung erreicht werden. Ansaugladung wird entweder als eine Mischung aus erstem Kraftstoff und Luft oder Luft alleine verstanden.

Im Hinblick auf Emissionen kann vorgesehen sein, dass der Schritt des Beobachtens der Emission des wenigstens einen Zylinders das Unterscheiden zwischen NOx und HC Emissionen umfasst. Diese Unterscheidung wird durch Beobachten der Verbrennungscharakteristika gemacht, welche entscheidend für die Bildung der spezifischen Emissionsspezies sind. D.h. zum Beispiel bei einem gegebenen Lambda, Mischungshomogenität und gegebener AGR-Rate, dass die NOx Emissionen weitestgehend von der Verbrennungslage abhängen, d.h. der Schwerpunktlage. Je früher die Schwerpunktlage ist (ausgedrückt in Kurbelwinkel), desto höher ist die NOx Bildung. Je später die Verbrennungslage, desto geringer ist die NOx Bildung. Die NOx Bildung ist auch von der Verbrennungsgeschwindigkeit herbeigeführt, ausgedrückt als Brenndauer (z.B. dem Kurbelwinkelbetrag für Δθ_{10-90%}). Der Zusammenhang ist solchermaßen, dass eine hohe Verbrennungsgeschwindigkeit (kleines Δθ) in höherem NOx resultiert, während eine geringere Verbrennungsgeschwindigkeit in geringerem NOx resultiert. Das ist so, weil im Fall hoher Verbrennungsgeschwindigkeiten der Großteil der Verbrennung nahe dem oberen Totpunkt stattfindet und damit bei relativ hohen Temperaturen. Nachdem die Temperatur der bestimmende Parameter für die NOx Bildung ist, resultiert dies in hohen NOx Werten für hohe Verbrennungsgeschwindigkeiten. Für die HC Emission sind die folgenden Charakteristika für deren Bildung relevant: je höher die Verbrennungstemperatur, desto geringer die HC Bildung. D.h. für HC Emissionen ist der Zusammenhang zu den oben angegebenen Verbrennungsparametern genau umgekehrt zu dem Verhältnis für die NOx Bildung. Es kann deswegen vorgesehen sein, dass, wenn die NOx Emissionen zu hoch sind, die Menge des zweiten Kraftstoffes der in die Vorkammer zugeführt wird, reduziert wird und/oder die chemische Zusammensetzung der Vorkammerladung solchermaßen verändert wird, dass die Flammengeschwindigkeit reduziert wird und/oder die Temperatur der Zylinderladung reduziert wird.

Weil die Menge an der Vorkammer zugeführten zweiten Kraftstoff und/oder die chemische Zusammensetzung der Vorkammerladung die Dauer im Hauptbrennraum nach Zündung der Vorkammer bestimmen, beeinflusst die Vorkammer auch die NOx Bildung.

Dabei bewirkt ein Reduzieren der Menge an in die Vorkammer eingeführtem zweiten Kraftstoff und/oder das Ändern der chemischen Zusammensetzung der Vorkammerladung in einer die Flammengeschwindigkeit reduzierenden Weise, eine längere Dauer der Verbrennung in der Vorkammer und damit geringere NOx Bildung.

Wenn die NOx Emissionen zu hoch sind, wird die Menge des der Vorkammer zugeführten zweiten Kraftstoffes so verändert, dass der durch den zweiten Kraftstoff der Vorkammer zugeführte Energiegehalt verringert wird.

Umgekehrt, wenn die HC Emissionen zu hoch sind, wird die Menge an in die Vorkammer zugeführtem zweitem Kraftstoff erhöht und/oder die chemische Zusammensetzung der Vorkammerladung so verändert, dass die Flammengeschwindigkeit erhöht wird und/oder es wird der Zündzeitpunkt vorverlegt und/oder es wird die Temperatur der Zylinderladung erhöht.

Die Temperatur der Zylinderladung kann z.B. erhöht werden durch Verwendung von beidem, externer und/oder interner AGR. Alternativ oder zusätzlich könnte die Lufttemperatur erhöht werden. Der Schritt des Änderns der Temperatur der Zylinderladung kann durch externe AGR erreicht werden, sodass, wenn die Temperatur der Zylinderladung erhöht werden soll, die externe AGR-Rate erhöht wird. Soll die Temperatur der Zylinderladung verringert werden, wird die externe AGR-Rate verringert.

Das heißt, wenn NOx-Emissionen zu hoch sind, wird die Menge des der Vorkammer zugeführten zweiten Kraftstoffes reduziert und/oder die chemische Zusammensetzung der Vorkammerladung so verändert, dass die Flammengeschwindigkeit verringert wird und/oder es wird der Zündzeitpunkt verzögert und/oder es wird die Temperatur der Zylinderladung verringert.

Im Hinblick auf Emissionen kann festgehalten werden, dass gemäß der erfinderischen Methode:
- NOx-Emissionen sehr gering sind, da ein sehr hohes Luft-Kraftstoffverhältnis (eine sehr magere Mischung) verwendet werden kann, wie es in einer funkengezündeten Brennkraftmaschine beispielsweise nicht möglich wäre. Es ist auch wichtig, dass sowohl der erste als auch der zweite Kraftstoff mit Luft oder Zylinderladung vor dem Verbrennungsbeginn vorgemischt werden.
- CO- und HC-Emissionen gering sind, weil die Verbrennung schnell ist und nahe dem oberen Totpunkt endet und weil die Temperatur der Zylinderladung hoch ist.
- Die Rußemissionen gering sind, weil sowohl der erste als auch der zweite Kraftstoff mit Luft oder Zylinderladung vorgemischt sind.

Alternativ oder zusätzlich ist die Brennkraftmaschine mit einem variablen Ventiltrieb ausgestattet, der in der Lage ist, im Hinblick auf den wenigstens einen Zylinder die Ventilöffnungszeiten und/oder die Ventilerhebungskurven des Auslass- und/oder des Einlassventils zu variieren. Es kann vorgesehen sein, dass der Schritt des Änderns der Temperatur der Zylinderladung durch den variablen Ventiltrieb bewirkt wird - vorzugsweise, indem das Auslassventil früher geschlossen wird, um die Temperatur der Zylinderladung zu erhöhen beziehungsweise indem das Auslassventil später geschlossen wird, um die Temperatur der Zylinderladung zu verringern. Abgesehen von den Betätigungszeiten können auch die Ventilerhebungskurven in einem variablen Ventiltrieb kontrolliert werden. Die Ventilerhebungskurve beschreibt die jeweilige Position der Ventile relativ zum geschlossenen Zustand in Bezug auf den Kurbelwinkel. Indem die Ventilerhebungskurven verändert werden, können die Mengen von verbliebenem Abgas in sehr vorteilhafter Weise moduliert werden. Wenn die Auslassventile wiederöffnen oder während der Einlassphase offen gehalten werden, fließen Abgase zurück zu dem Zylinder und erhöhen damit die Zylinderladungstemperatur. Als ein weiteres Beispiel: Wenn die Einlassventile auch während des Auslasstaktes öffnen, fließen Abgase in das Einlasssystem und erhöhen damit die Ladungstemperatur im Einlass, folglich wird, wenn die Einlassventile während des regulären Einlasstaktes geöffnet werden, die Ladungstemperatur erhöht.

Weiters kann vorgesehen sein, dass der Schritt des Änderns der Temperatur der Zylinderladung durch einen variablen Ventiltrieb erreicht wird, indem ein bereits geschlossenes Auslassventil im Einlasshub des Kolbens wieder geöffnet wird, wodurch die Temperatur der Zylinderladung erhöht wird. Dies hat den besonderen Vorteil, dass die In-Zylinder-Ladungstemperatur zylinderindividuell kontrolliert werden kann. Es ist weiters vorteilhaft, dass die Ventilsteuerzeiten auf einer Zyklus- zu Zyklusbasis geändert werden können, d. h. die Kontrollantwort ist sehr rasch.

Als weitere Alternative kann vorgesehen sein, dass der Schritt des Änderns der Temperatur der Zylinderladung durch einen variablen Ventiltrieb dadurch erreicht wird, indem ein geschlossenes Einlassventil während des Auslasshubes des Kolbens wieder geöffnet wird, wodurch die Temperatur der Zylinderladung erhöht wird.

Durch die Änderung der Ventilöffnungszeiten werden die Mengen von verbleibendem Abgas in den Zylindern verändert und wird damit die interne AGR-Rate variiert. Nachdem die Temperatur des verbleibenden Abgases sehr hoch ist, ist diese Maßnahme sehr wirkungsvoll, um die Ladungstemperatur zu erhöhen.

Es kann vorgesehen sein, dass der Schritt des Änderns der Temperatur der Zylinderladung durch einen variablen Ventiltrieb dadurch erreicht wird indem das Auslassventil zur Erhöhung der internen AGR geschlossen wird und damit die Temperatur der Zylinderladung erhöht oder indem das Auslassventil geschlossen wird, sodass die interne AGR verringert wird und damit die Temperatur der Zylinderladung verringert wird.

Es kann vorgesehen sein, dass der Schritt des Änderns der Temperatur der Zylinderladung durch einen variablen Ventiltrieb dadurch erreicht wird, indem ein bereits geschlossenes Auslassventil im Einlasshub des Kolbens wieder geöffnet wird und dadurch die Temperatur der Zylinderladung erhöht wird. Es kann vorgesehen sein, dass der Schritt des Änderns der Temperatur der Zylinderladung durch einen variablen Ventiltrieb dadurch erreicht wird, indem ein geschlossenes Einlassventil während des Ausstoßhubes des Kolbens wieder geöffnet wird und damit die Temperatur der Zylinderladung erhöht wird. Es kann vorgesehen sein, dass der Schritt des Änderns der Temperatur der Zylinderladung entweder ein Erhöhen des Gegendrucks umfasst, um die Temperatur der Zylinderladung zu erhöhen, oder ein Verringern des Gegendrucks umfasst, um die Temperatur der Zylinderladung zu verringern. Ein erhöhtes Gegendruckniveau erhöht die interne AGR-Rate und umgekehrt.

Es kann vorgesehen sein, dass der Schritt des Änderns der Zylinderladung durch eine zusätzliche Einführung des zweiten Kraftstoffes in die Vorkammer erzielt wird und indem die Vorkammerladung vor der Verbrennung im Hauptbrennraum im Gaswechsel Oberer Totpunkt entzündet wird, während die Einlass- und Auslassventile geschlossen sind. Ein Fachmann wird die Konsequenzen der Maßnahme des Kontrollierens des freigesetzten Energiebetrages in dieser ersten, die Ladungstemperatur beeinflussenden Verbrennung verstehen.

Die Erfindung wird vorzugsweise bei einem 4-Takt-Motor ausgeführt, ist aber keinesfalls auf einen 4-Takt-Motor limitiert. Die Erfindung kann beispielsweise auch bei einem 2-, 5- oder einem 6-Takt-Motor ausgeführt werden.

Weitere Gegenstände und Vorteile der Erfindung werden im Licht der begleitenden Zeichnungen ersichtlich, wobei:
- Fig. 1a: ein Ablaufdiagramm der Kontrolllogik bezüglich der NOx-Emissionen zeigt,
- Fig. 1b: ein Ablaufdiagramm der Kontrolllogik bezüglich der HC-Emissionen zeigt und
- Fig. 2: ein Ablaufdiagramm der Kontrolllogik bezüglich der mechanischen Spannung zeigt.

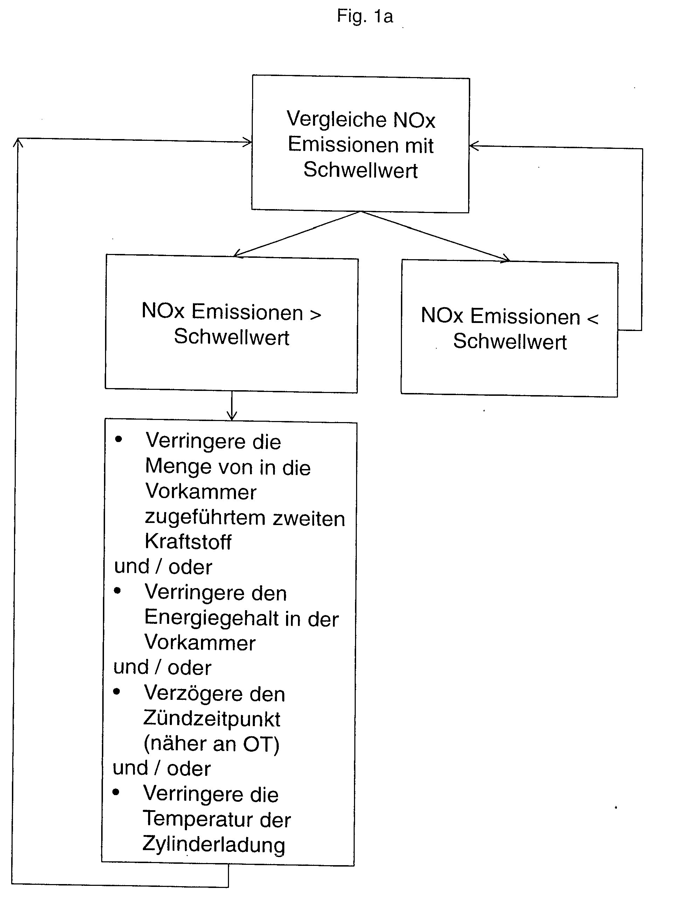

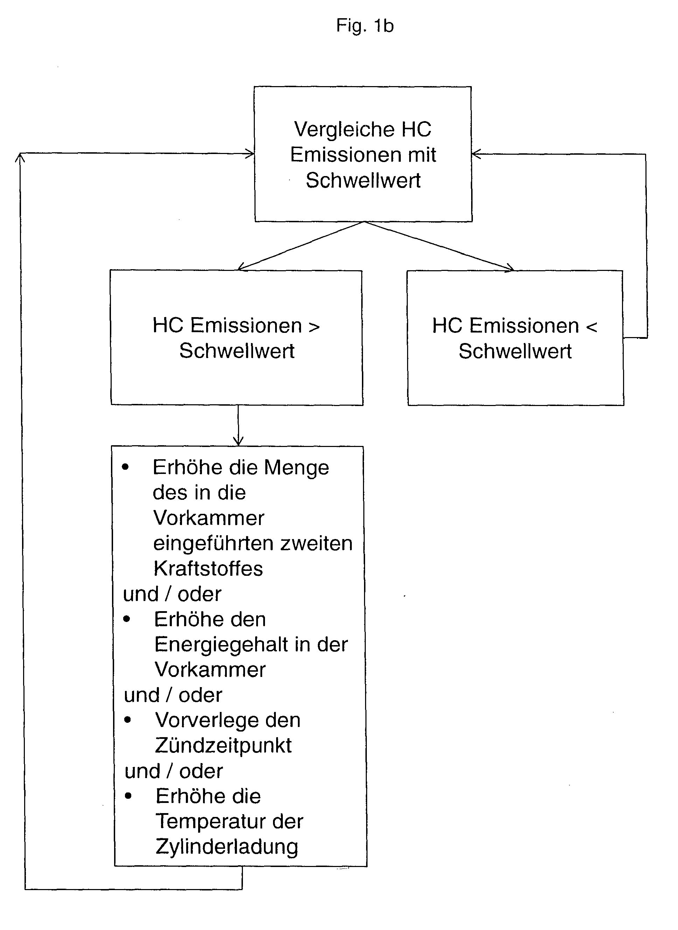

Fig. 1 a zeigt ein Ablaufdiagramm der Kontrolllogik bezüglich der NOx-Emissionen. In einem ersten Schritt werden die gegenwärtigen NOx-Emissionen mit einem vorgegebenen Schwellwert verglichen. Im Falle, dass die NOx-Emissionen den vorgegebenen Schwellwert nicht überschreiten, geht die Schleife zurück zum Start. Im Falle, dass die NOx-Emissionen den vorgegebenen Schwellwert überschreiten (linke Seite des Ablaufdiagramms) werden eine oder mehrere der folgenden Maßnahmen ausgeführt, um den NOx-Emissionen zu begegnen:
- Reduziere die Menge des in die Vorkammer eingeführten zweiten Kraftstoffes.
- Verringere den Energiegehalt in der Vorkammer.
- Verringere die Temperatur der Zylinderladung.
- Verzögere den Zündzeitpunkt (näher an OT).

Nach Durchführung der oberen Maßnahmen geht die Schleife zurück zu dem Vergleich der NOx-Emissionen mit einem vorgegebenen Schwellwert.

In ähnlicher Weise zeigt Fig. 1 b ein Ablaufdiagramm der Kontrolllogik bezüglich der Kohlenwasserstoff-(HC)-Emissionen. In einem ersten Schritt werden die gegenwärtigen HC-Emissionen mit einem vorgegebenen Schwellwert verglichen. Im Falle, dass die HC-Emissionen den vorgegebenen Schwellwert nicht überschreiten, geht die Schleife zurück zum Start. Im Falle, dass die HC-Emissionen den vorgegebenen Schwellwert überschreiten (linke Seite des Ablaufdiagramms), wird eine oder mehrere der folgenden Maßnahmen ausgeführt, um den HC-Emissionen zu begegnen:
- Erhöhe den Betrag des in die Vorkammer eingeführten zweiten Kraftstoffes.
- Erhöhe den Energiegehalt in der Vorkammer.
- Lege den Zündzeitpunkt vor.
- Erhöhe die Temperatur der Zylinderladung.

Nach Ausführung der oberen Maßnahmen geht die Schleife zurück zum Vergleich der HC-Emissionen mit einem vorgegebenen Schwellwert.

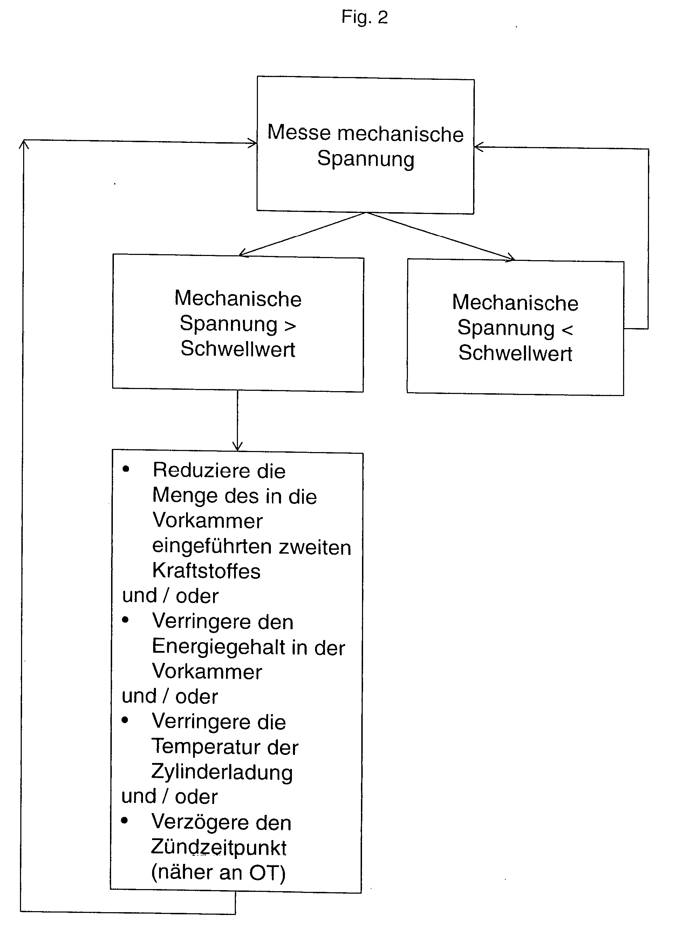

Fig. 2 zeigt ein Ablaufdiagramm der Kontrolllogik bezüglich der mechanischen Lasten (Spannungen) auf den Motor. Für die mechanische Spannung charakteristische Signale werden durch geeignete Sensoren erfasst (nicht gezeigt). Die für die mechanische Spannung indikativen Werte werden dann mit einem für die mechanische Spannung vorgegebenen Schwellwert verglichen. Im Falle, dass sich die Werte für die mechanische Spannung unter dem Schwellwert befinden, geht die Schleife zurück zum Start. Im Falle, dass die Werte für die mechanische Spannung den vorgegebenen Schwellwert überschreiten, werden eine oder mehrere der folgenden Maßnahmen ausgeführt, um die mechanische Spannung zu reduzieren:
- Verringere den Gehalt des in die Vorkammer eingeführten zweiten Kraftstoffes.
- Verringere den Energiegehalt in der Vorkammer.
- Verringere die Temperatur der Zylinderladung.
- Verzögere den Zündzeitpunkt (näher an OT).

Nach Ausführung der oberen Maßnahmen geht die Schleife zurück zum Vergleich der Werte für die mechanische Spannung zu einem vorgegebenen Schwellwert.

## Patentansprüche

1. Verfahren zum Betreiben einer funkengezündeten Brennkraftmaschine mit wenigstens einem Zylinder und einem in dem wenigstens einen Zylinder bewegbaren Kolben und wenigstens einer mit dem wenigstens einen Zylinder verbundenen Vorkammer, wobei das Verfahren die Schritte umfasst:
- Bilden eines zündfähigen Gemisches durch weitestgehend homogenes Mischen eines ersten Kraftstoffes und Luft und Einführen dieser Mischung in den wenigstens einen Zylinder,
- Verdichten des zündfähigen Gemisches mit dem Kolben in einem Verdichtungstakt,
- Einführen eines zweiten Kraftstoffes in die Vorkammer zu einem Einführungszeitpunkt vor Beginn der Verbrennung, dadurch Schaffen einer Vorkammerladung, wobei der zweite Kraftstoff die gleiche oder eine verschiedene chemische Zusammensetzung und/oder Konzentration bezüglich des ersten Kraftstoffes aufweist,
- Funkenzünden der Vorkammerladung,
**dadurch gekennzeichnet, dass** die Emission des wenigstens einen Zylinders und/oder die durch die Verbrennung verursachte Spannung auf den wenigstens einen Zylinder beobachtet werden und wenn die Emissionen und/oder die mechanische Spannung über jeweiligen vorgegebenen Schwellwerten liegt, individuell für den wenigstens einen Zylinder
- die chemische Zusammensetzung und/oder die Menge an in die Vorkammer zugeführten zweiten Kraftstoffes,
- und/oder die Temperatur der Zylinderladung,
- und/oder der Zündzeitpunkt
verändert werden, solchermaßen, dass die Emissionen und/oder die mechanische Spannung unter ihre jeweiligen vorgegebenen Schwellwerte gehen.

2. Verfahren nach Anspruch 1 **dadurch gekennzeichnet, dass** der erste Kraftstoff Erdgas oder eine Mischung von Erdgas und CO₂ solchermaßen ist, dass die Menge von CO₂ und CH₄ höher als 80 % sind.

3. Verfahren nach Anspruch 1 oder 2, wobei der zweite Kraftstoff Erdgas oder eine Kombination von Erdgas und einem Gas mit mehr als 10 Volumenprozent H₂ ist.

4. Verfahren nach wenigstens einem der vorangegangenen Ansprüche, wobei das Beobachten der Emission des wenigstens einen Zylinders und/oder der von der Verbrennung verursachten mechanischen Spannung des wenigstens einen Zylinders ausgeführt wird, indem für das Verbrennungsereignis charakteristische Signale in dem wenigstens einen Zylinder gemessen werden.

5. Verfahren nach Anspruch 4, wobei der Schritt des Messens der für das Verbrennungsereignis charakteristischen Signale in dem wenigstens einen Zylinder das Bestimmen einer charakteristischen Zeit des Verbrennungsereignisses und/oder der Dauer des Verbrennungsereignisses umfasst.

6. Verfahren nach wenigstens einem der vorangegangenen Ansprüche, wobei der Schritt des Änderns der Menge an eingeführtem zweiten Kraftstoffs und/oder der chemischen Zusammensetzung der Vorkammerladung eine Verringerung des Energiegehaltes in der Vorkammer verglichen mit dem Energiegehalt in dem Hauptbrennraum umfasst, wenn die mechanische Spannung zu hoch ist.

7. Verfahren nach wenigstens einem der vorangegangenen Ansprüche, wobei der Schritt des Änderns der Temperatur der Zylinderladung ein Senken der Temperatur der Zylinderladung umfasst, wenn die mechanische Spannung zu hoch ist.

8. Verfahren nach Anspruch 7, wobei die Temperatur der Zylinderladung verringert wird, indem die Temperatur der Einlassladung und/oder des ersten Kraftstoffes gesenkt wird.

9. Verfahren nach wenigstens einem der vorangegangenen Ansprüche, wobei der Schritt des Beobachtens der Emission des wenigstens einen Zylinders ein Unterscheiden zwischen NOx- und HC-Emissionen umfasst.

10. Verfahren nach Anspruch 9, wobei wenn die NOx-Emissionen zu hoch sind, die Menge des in die Vorkammer eingeführten zweiten Kraftstoffes in solcher Weise verändert wird, dass der durch den zweiten Kraftstoff in die Vorkammer zugeführte Energiegehalt verringert wird.

11. Verfahren nach Anspruch 9 oder 10, wobei wenn die HC-Emissionen zu hoch sind, die Menge des in die Vorkammer eingeführten zweiten Kraftstoffes in solcher Weise verändert wird, dass der Energiegehalt in der Vorkammer verglichen mit dem Energiegehalt im Hauptbrennraum erhöht wird.

12. Verfahren nach wenigstens einem der vorangegangenen Ansprüche, **dadurch gekennzeichnet, dass** der Schritt des Änderns der Temperatur der Zylinderladung durch externe AGR erreicht wird solchermaßen, dass wenn die Temperatur der Zylinderladung erhöht werden soll, die externe AGR-Rate erhöht wird bzw., wenn die Temperatur der Zylinderladung verringert werden soll, die externe AGR-Rate verringert wird.

13. Verfahren nach wenigstens einem der vorangegangenen Ansprüche, wobei die Brennkraftmaschine einen variablen Ventiltrieb umfasst, der in der Lage ist, die Einlass- und/oder Auslassventilsteuerzeiten und/oder Ventilerhebungskurven individuell im Hinblick auf den wenigstens einen Zylinder zu variieren.

14. Verfahren nach Anspruch 13, wobei der Schritt des Änderns der Temperatur der Zylinderladung durch einen variablen Ventiltrieb erreicht wird - vorzugsweise durch Schließen des Auslassventiles solchermaßen, dass die interne AGR erhöht wird und dadurch die Temperatur der Zylinderladung erhöht wird, bzw. durch Schließen des Auslassventiles solchermaßen, dass die interne AGR verringert wird und dadurch die Temperatur der Zylinderladung verringert wird.

15. Verfahren nach Anspruch 13 oder 14, wobei der Schritt des Änderns der Temperatur der Zylinderladung durch einen variablen Ventiltrieb dadurch erreicht wird, dass ein bereits geschlossenes Auslassventil im Einlasshub des Kolbens wieder geöffnet wird und dadurch die Temperatur der Zylinderladung erhöht wird.

16. Verfahren nach Anspruch 13, 14 oder 15, wobei der Schritt des Änderns der Temperatur der Zylinderladung durch einen variablen Ventiltrieb dadurch erreicht wird, indem ein geschlossenes Einlassventil während des Auslasshubes des Kolbens wieder geöffnet wird und dadurch die Temperatur der Zylinderladung erhöht wird.

17. Verfahren nach wenigstens einem der vorangegangenen Ansprüche, wobei der Schritt des Änderns der Temperatur der Zylinderladung entweder ein Erhöhen des Gegendrucks zur Erhöhung der Temperatur der Zylinderladung oder ein Verringern des Gegendrucks zur Verringerung der Temperatur der Zylinderladung umfasst.

18. Verfahren nach wenigstens einem der vorangegangenen Ansprüche, wobei der Schritt des Änderns der Temperatur der Zylinderladung durch zusätzliche Einführung des zweiten Kraftstoffes in die Vorkammer und Entzünden der Vorkammerladung vor der Verbrennung im Hauptbrennraum in dem Gaswechsel OT erreicht wird, während die Einlass- und Auslassventile geschlossen sind.

19. Funkengezündete Brennkraftmaschine mit wenigstens einem Zylinder und einem in dem wenigstens einen Zylinder bewegbaren Kolben und einer mit dem wenigstens einen Zylinder verbundenen Vorkammer und einer Vorrichtung zum Einführen von zweitem Kraftstoff in die Vorkammer mit einer elektronischen Kontrolleinheit, die dazu ausgestaltet ist, ein Verfahren nach wenigstens einem der Ansprüche 1 bis 18 auszuführen.
